# EUROPÄISCHE PATENTSCHRIFT

(11) **EP 3 231 066 B1**
(45) Veröffentlichungstag und Bekanntmachung des Hinweises auf die Patenterteilung: **05.02.2020**
(21) Anmeldenummer: 15801990.1
(22) Anmeldetag: 26.11.2015
(51) Int. Cl.: H02K 3/487, H02K 3/42, H02K 11/01

(54) **ELEKTRISCHE MASCHINE UND KRAFTFAHRZEUG**
ELECTRIC MACHINE AND MOTOR VEHICLE
MOTEUR ÉLECTRIQUE ET VÉHICULE À MOTEUR

(30) Priorität: 10.12.2014 DE 102014018338
(43) Veröffentlichungstag der Anmeldung: 18.10.2017
(73) Patentinhaber: Audi AG, 85045 Ingolstadt (DE); Karlsruher Institut für Technologie, 76131 Karlsruhe (DE)
(72) Erfinder: HEIDLER, Bastian, 85402 Kranzberg (DE)
(86) Internationale Anmeldenummer: PCT/EP2015/002375
(87) Internationale Veröffentlichungsnummer: WO 2016/091360

(56) Entgegenhaltungen:
- EP-A1- 2 161 816
- EP-A2- 2 469 687
- US-A- 5 661 353
- US-A- 5 821 649
- US-A- 5 821 652
- US-A- 5 979 087
- US-A1- 2010 007 235
- US-B1- 6 202 285

## Beschreibung

Die Erfindung betrifft eine elektrische Maschine, umfassend ein zumindest teilweise elektrisch leitendes, auf einem Bezugspotential liegendes Gehäuse, einen Stator, an welchem nutartige Aufnahmen für Statorwicklungen ausgebildet sind, wobei in den Aufnahmen jeweils ein die Aufnahme rotorseitig schließendes Verschlusselement vorgesehen ist, und einen innerhalb des Stators drehbar gelagerten Rotor. Daneben betrifft die Erfindung ein eine solche elektrische Maschine umfassendes Kraftfahrzeug.

Solche elektrischen Maschinen werden insbesondere als Asynchronmaschinen aber auch als permatent- oder fremderregte Synchronmaschinen ausgeführt und werden seit einiger Zeit zum Antrieb von Kraftfahrzeugen in Betracht gezogen. Zum Aufbau des Stators weist ein Blechpaket nutartige Aufnahmen für die gegeneinander isolierten Statorwicklungen auf. Die Aufnahmen können durch ein Verschlusselement, das häufig als Nutenkeil bezeichnet wird, geschlossen werden. Die Statorwicklungen werden typischerweise über einen Wechselrichter gespeist, der eine Mehrphasenwechselspannung im Kilohertzbereich aus einer Gleichspannung wandelt. Als Schaltelemente der Wechselrichter werden üblicherweise Leistungshalbleiterbauelemente wie IGBT oder GTO eingesetzt.

Allerdings entsteht durch die elektrisch isolierte Anordnung der Statorwicklungen gegenüber dem Rotor einerseits und dem Blechpaket des Stators andererseits eine kapazitive Kopplung dieser Komponenten. Die geschalteten Wechselrichter haben darüber hinaus eine Spannungsnullkomponente, die eine Gleichtaktspannung gegenüber dem Bezugspotential, also insbesondere dem Massepotential, aufweist. Über die genannten parasitären Kapazitäten überträgt sich die Gleichtaktspannung auf eine Welle der elektrischen Maschine und erzeugt so eine Wellenspannung gegenüber dem Bezugspotential. Dabei treten insbesondere an einem oder mehreren Lagern der Maschine sogenannte du/dt-Ströme auf. Darüber hinaus kann die Wellenspannung stochastische Durchschläge durch ein Schmiermittel des Lagers erzeugen, welche zu einer Funkenerosion (electrical discharge machining, EDM) metallischer Lagerkomponenten führen. Diese EDM-Ströme können binnen einer verhältnismäßig kurzen Betriebszeit zu Lagerschäden führen.

Das Dokument US5.821.652, das zur Abgrenzung der zweiteiligen Form dient, zeigt eine Abschirmung der Statorwicklungen mittels Verschlusselemente, wobei diese Verschlusselemente über Leiterbereichserweiterungen in axialer Richtung elektrisch verbunden sind und danach als kompletter Leiterrahmen über einen Leiter mit dem Gehäuse verbunden sind.

Der Erfindung liegt daher die Aufgabe zugrunde, eine elektrische Maschine anzugeben, bei der durch die kapazitive Kopplung zwischen den die Gleichtaktspannung führenden Wicklungen und dem Rotor auftretende Effekte reduziert werden.

Zur Lösung dieser Aufgabe ist bei einer Maschine der eingangs genannten Art erfindungsgemäß vorgesehen, dass das Verschlusselement einen flächigen, elektrisch leitfähigen Leiterbereich zur Abschirmung der Statorwicklungen gegenüber dem Rotor aufweist, wobei der Leiterbereich mit dem Gehäuse elektrisch leitend verbunden ist.

Der Erfindung liegt die Überlegung zugrunde, eine elektrostatische Abschirmung der Statorwicklungen gegenüber dem Rotor dadurch zu realisieren, dass nur in dem unmittelbar zwischen der Statorwicklung und dem Rotor gelegenen Raum ein mit dem Bezugspotential verbundener Leiterbereich angeordnet ist. Dadurch wird eine erhebliche Reduktion der parasitären Kapazität zwischen diesen Bereichen erreicht. Die Anordnung des Leiterbereichs in den Aufnahmen führt im Gegensatz zu einer durchgehenden Ausbildung eines Leiterbereichs zwischen Stator und Rotor zu einer vorteilhaften Unterdrückung von Wirbelströmen. Somit können vorteilhafterweise bekannte elektrische Maschinen ohne Verschlusselement einfach nachgerüstet oder vorhandene Verschlusselemente durch erfindungsgemäße Ausführungen ersetzt werden. In der Vergangenheit wurde im Bereich elektrischer Maschinen für Traktionszwecke üblicherweise auf Verschlusselemente verzichtet. Da die Verwendung von Verschlusselementen, insbesondere Nutenkeilen, in elektrischen Maschinen seit sehr langer Zeit bekannt ist, baut die Erfindung vorteilhafterweise auf einer robusten technischen Grundlage auf.

Zweckmäßigerweise wird das Verschlusselement dabei so ausgeführt, dass der Leiterbereich über die gesamte Länge der Aufnahme ausgebildet ist. So kann erreicht werden, dass über die gesamte Länge des Stators der die parasitäre Kapazität aufweisende Bereich abgeschirmt ist. Es ergibt sich somit vorteilhafterweise eine verbesserte Reduktion der kapazitiven Kopplung, als bei einer nur teilweisen Ausbildung des Leiterbereichs entlang des Verschlusselements. Dabei ist es zweckmäßig, dass der Leiterbereich auch über die gesamte Breite des Verschlusselements ausgebildet ist, so dass die Aufnahme vollständig abgeschirmt ist.

Es ist bei einer erfindungsgemäßen elektrischen Maschine von besonderem Vorteil, wenn der Leiterbereich über wenigstens eine Stirnseite des Stators hinaus in Form einer Leiterbereichserweiterung fortgesetzt ist und zwischen dem Rotor und wenigstens einem mehrere Statorwicklungen umfassenden Wickelkopf angeordnet ist. Solche stirnseitig ausgebildeten Wickelköpfe tragen in hohem Maße zur kapazitiven Kopplung zwischen Stator und Rotor bei, die dadurch vermindert werden kann, dass der Leiterbereich über die Aufnahme hinaus eine Abschirmung durch eine Leiterbereichserweiterung gewährleistet. Diese Leiterbereichserweiterung kann als Weiterführung des Verschlusselements ausgebildet sein, bevorzugt wird die Leiterbereichserweiterung jedoch aus einem mit dem Leiterbereich elektrisch leitend verbundenen zusätzlichen Element ausgebildet. Dadurch kann eine weitere Reduktion der parasitären kapazitiven Kopplung erreicht werden.

In einer vorteilhaften Weiterbildung ist vorgesehen, dass die Leiterbereichserweiterung ausgehend vom Verschlusselement trapezförmig aufgeweitet und/oder mit einem Gehäuseabschnitt elektrisch leitend verbunden ist. Da der stirnseitige Wickelkopf typischerweise breitere Abmessungen als die Aufnahme aufweist, bietet es sich an, die Leiterbereichserweiterung trapezförmig aufzuweiten. Dabei ist die aufnahmeseitige Grundseite des Trapezes schmaler, als die ihr gegenüberliegende. Zweckmäßigerweise kann diese gegenüberliegende Seite dann unmittelbar mit einem Gehäuseabschnitt elektrisch leitend verbunden sein. Bevorzugt ist die Leiterbereichserweiterung für eine möglichst starke Reduktion der Kapazität eng am Wickelkopf verlaufend zum Gehäuseabschnitt geführt.

Vorteilhafterweise können alle genannten Ausführungsformen einer erfindungsgemäßen elektrischen Maschine so ausgestaltet sein, dass der Leiterbereich als eine erste Oberflächenschicht des Verschlusselements ausgebildet ist. In Betracht kommt hier insbesondere eine Beschichtung eines Grundkörpers mit einem elektrisch leitenden Material. Dabei können alle elektrisch leitfähigen Metalle und Legierungen aus diesen mit einer ausreichenden elektrische Leitfähigkeit in Betracht kommen, wie beispielsweise Kupfer oder Aluminium. Die Oberflächenschicht kann insbesondere eine Stärke zwischen 100 nm und 10 µm, bevorzugt zwischen 1 µm und 5 µm, aufweisen. Für die Realisierung der Oberflächenschicht kommen sämtliche Beschichtungsverfahren in Betracht, welche eine Realisierung einer Oberflächenschicht in der angegebenen Stärke ermöglichen, beispielsweise Sprüh- oder Tauchbeschichtungsverfahren oder Gasphasenabscheidungsverfahren. Es kann ausdrücklich auch vorgesehen sein, dass die erste Oberflächenschicht über die gesamte Oberfläche des Verschlusselements ausgebildet ist. Dadurch kann zusätzlich eine vorteilhafte Reduktion der kapazitiven Kopplung zwischen Statorwicklung und dem Statorblechpaket erreicht werden. Insgesamt trägt die Realisierung des Leiterbereichs als eine erste Oberflächenschicht dazu bei, dass aufgrund des dünnen durchströmbaren Querschnitts des Leiterbereichs Wirbelströme weitestgehend unterdrückt werden.

Eine zweckmäßige Weiterbildung der erfindungsgemäßen elektrischen Maschine sieht ferner vor, dass der Leiterbereich zumindest teilweise aus einer elektrisch leitenden oder mit einem elektrisch leitenden Material beschichteten Folie ausgebildet ist. Dies betrifft insbesondere eine Fortsetzung des Leiterbereichs durch eine mit diesem elektrisch leitend verbundene Folie als Leiterbereichserweiterung. Dies stellt eine einfach zu realisierende Ausführungsform der Leiterbereichserweiterung dar. Hinsichtlich des Materials und der Stärke der elektrisch leitenden Folie bzw. der elektrisch leitenden Beschichtung der Folie können die Ausführungen des vorangegangenen Absatzes übertragen werden. Gleiches gilt für die dort beschriebenen Vorteile. Ferner kann neben der Leiterbereichserweiterung auch die erste Oberflächensicht durch Laminieren des Verschlusselements mit einer solchen Folie realisiert werden.

Bei einer erfindungsgemäßen elektrischen Maschine wird es weiterhin bevorzugt, dass der Leiterbereich wenigstens in einem Berührungsbereich mit dem Stator eine elektrisch isolierende zweite Oberflächenschicht aufweist. Die effiziente Vermeidung von Wirbelströmen auf dem Leiterbereich setzt eine ausreichende elektrische Isolation zwischen den Leiterbereichen der einzelnen Verschlusselemente und den Blechpaket des Stators voraus. Dazu wird die Aufbringung einer isolierenden zweiten Oberflächenschicht auf den insbesondere als erste Oberflächenschicht ausgebildeten Leiterbereich bevorzugt. Dies betrifft insbesondere den Berührungsbereich mit dem Blechpaket, kann jedoch auch weitere Abschnitte des Leiterbereichs umfassen. Zur Realisierung der zweiten Oberflächenschicht kommt insbesondere eine Sprüh- oder Tauchlackierung in Betracht.

Grundsätzlich ist es zweckmäßig, dass die Verschlusselemente ein aus einem Kunststoff, insbesondere einem Duroplast, ausgebildeten Grundkörper umfassen. Solche Kunststoffe sind üblicherweise nicht elektrisch leitend und beschränken das Auftreten von Wirbelströmen somit auf den Leiterbereich, so dass diese weitestgehend unterdrückt werden. Es bietet sich dazu insbesondere an, die Verschlusselemente aus einem Duroplast auszubilden, wobei hinsichtlich der Auswahl des zu verwendenden Materials auf eine ausreichende Temperaturbeständigkeit im Hinblick auf die typischerweise in der elektrischen Maschine auftretenden Temperaturen zu achten ist.

Zweckmäßigerweise wird die erfindungsgemäße elektrische Maschine so ausgeführt, dass als das Bezugspotential ein Massepotential gewählt ist. Dieses entspricht insbesondere dem Massepotential des speisenden Wechselrichters, so dass durch die Abschirmung eine wirksame Reduktion der kapazitiven Kopplung erzeugt wird.

Neben der elektrischen Maschine betrifft die Erfindung auch ein Kraftfahrzeug, welches eine erfindungsgemäße elektrische Maschine aufweist. Sämtliche Ausführungen zur elektrischen Maschine lassen sich analog auf das Kraftfahrzeug übertragen, so dass auch mit diesem die bereits genannten Vorteile erzielt werden können.

Weitere Vorteile und Einzelheiten der Erfindung ergeben sich aus den im Folgenden beschriebenen Ausführungsbeispiel sowie anhand der Zeichnungen. Dabei zeigen:
- Fig. 1: eine Prinzipdarstellung eines Schnitts durch eine erfindungsgemäße elektrische Maschine,
- Fig. 2: eine Prinzipdarstellung eines Schnitts durch ein erfindungsgemäßes Verschlusselement,
- Fig. 3: eine Prinzipdarstellung eines erfindungsgemäßen Verschlusselements in Aufsicht und
- Fig. 4: ein erfindungsgemäßes Kraftfahrzeug.

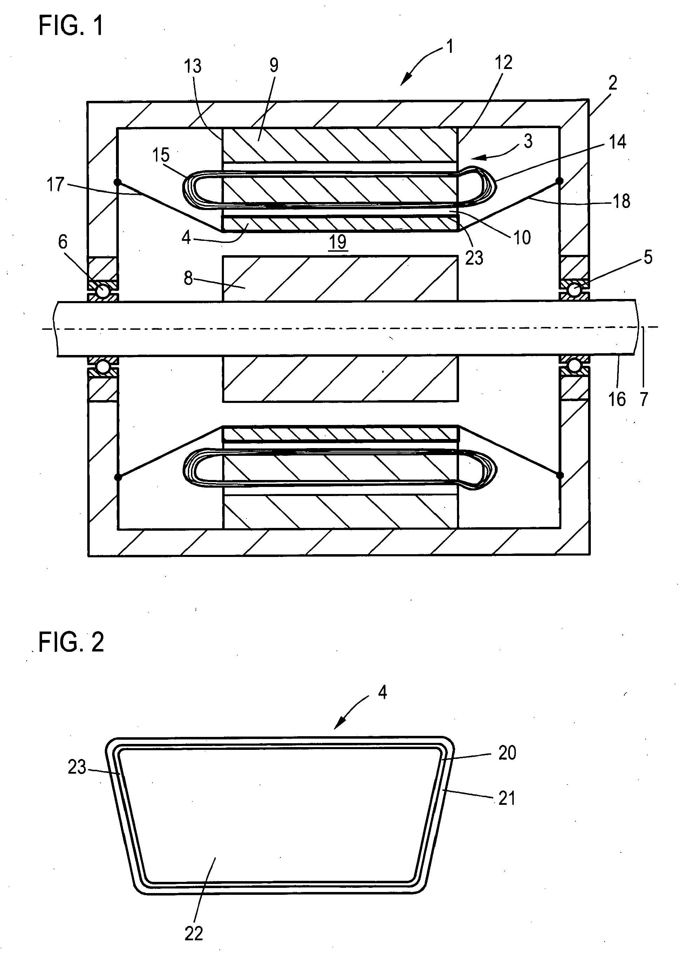

Fig. 1 zeigt eine erfindungsgemäße elektrische Maschine 1, umfassend ein Gehäuse 2, einen Stator 3 und einen mittels einer Welle 16 und zwei Lagern 5, 6 um eine Drehachse 7 drehbar gelagerten Rotor 8. Dabei weist der Stator 3 ein Blechpaket 9 mit mehreren rotorseitigen Aufnahmen 10 auf, durch welches die Statorwicklungen 11 verlaufen. Die Aufnahmen 10 sind jeweils durch ein Verschlusselement 4 geschlossen. An den Stirnseiten 12, 13 des Stators 3 ist jeweils ein Wickelkopf 14, 15 ausgebildet. Auf dem Verschlusselement 4 ist über dessen gesamte Länge ein Leiterbereich 23 ausgebildet, der an den Stirnseiten 12, 13 jeweils eine aus einer elektrisch leitenden Folie bestehende Leiterbereichserweiterung 17, 18 aufweist. Diese sind mit dem Gehäuse-2 elektrisch leitend verbunden, welches auf Massepotential liegt.

In einer solchen elektrischen Maschine 1 bilden sich parasitäre Kapazitäten zwischen der Statorwicklung 11 mit dem Wickelkopf 15 und dem Rotor 8, da zwischen diesen leitenden Elementen eine Gleichtaktspannung anliegt und diese durch den als Dielektrikum wirkenden luftgefüllten Raum 19 getrennt sind. Diese Kapazität wird allerdings dadurch reduziert, dass der Leiterbereich 23 des Verschlusselements 4 die innerhalb des Blechpaktes verlaufenden Statorwicklungen 11 vom Rotor 8 abschirmt und die Leiterbereichserweiterungen 17, 18 darüber hinaus eine Abschirmung der Wickelköpfe 14, 15 bewirken. Die Leiterbereichserweiterungen 17, 18 sind dabei eng an den Wickelköpfen 14, 15 geführt, um eine möglichst hohe Kapazität zwischen diesen zu erzeugen, welche jedoch über das Gehäuse 2 auf Massepotential liegt und so eine Reduktion der Gesamtkapazität bewirkt. Dies ergibt sich dadurch, dass die Gesamtkapazität durch die Einfügung des Verschlusselements 4 als eine Reihenschaltung zweier Teilkapazitäten aufgefasst werden kann, welche immer geringer ist als die kleinste Einzelkapazität.

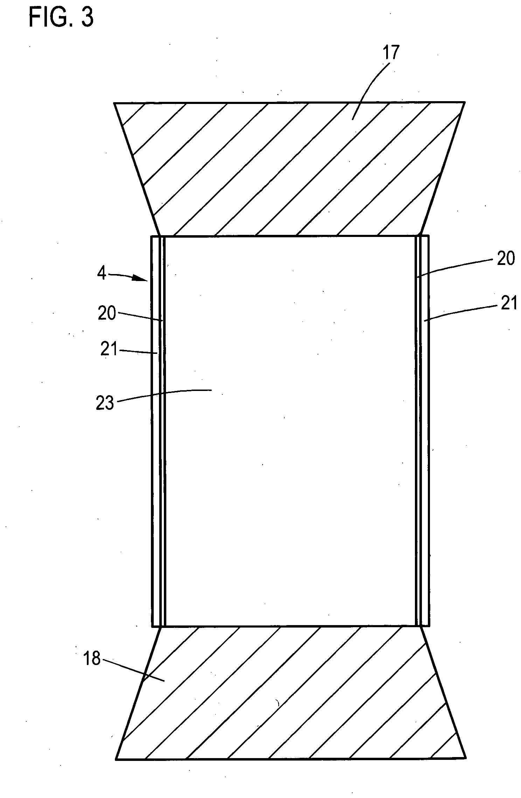

Fig. 2 und 3 zeigen jeweils Prinzipdarstellungen eines Verschlusselements 4, wobei Fig. 2 eine Schnittdarstellung und Fig. 3 eine Aufsicht auf die breite Grundfläche des keilförmig ausgebildeten Verschlusselements 4 ist. Auf einen Grundkörper 22 ist über dessen gesamte Länge und Breite eine den Leiterbereich 23 bildende erste Oberflächenschicht 20 aus Kupfer aufgebracht. Diese weist wiederum eine zweite Oberflächenschicht 21 aus einen elektrisch isolierendem Lack auf. Die erste Oberflächenschicht 20 ist in einer Stärke von 1 µm ausgeführt und stellt so für Wirbelströme einen hohen elektrischen Widerstand dar. Die zweite Oberflächenschicht 21 ist deutlich stärker ausgebildet, wobei die Größenverhältnisse nicht maßstabsgetreu sind. Darüber hinaus sind mit der ersten Oberflächenschicht 20 zwei Leiterbereichserweiterungen 17, 18 elektrisch leitend verbunden. Diese sind aus einer Kunststofffolie ausgebildet, welche mit einer dünnen Silberschicht derart bedampft ist, dass der Leiterbereich 23 mit dem Gehäuse elektrisch leitend verbunden werden kann. Die zweite Oberflächenschicht 21 ist dabei dazu ausgebildet, den Leiterbereich 23 gegen das Blechpaket 9 des Stators 3 zu isolieren.

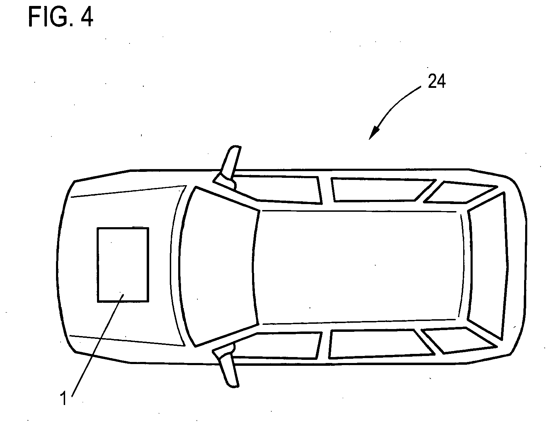

Schließlich zeigt Fig. 4 ein erfindungsgemäßes Kraftfahrzeug 24, in welches eine zum Antrieb dienende elektrische Maschine 1 eingebaut ist. Durch die in der Maschine 1 eingesetzte, zuvor beschriebene Abschirmung der Statorwicklungen 11 vom Rotor 8 mittels der Verschlusselemente 4 können EDM-Ströme durch die Lager 5, 6 verhindert werden und es kann eine längere Haltbarkeit der elektrischen Maschine 1 im Kraftfahrzeug 24 erzielt werden.

## Patentansprüche

1. Elektrische Maschine (1), umfassend ein zumindest teilweise elektrisch leitendes, auf einem Bezugspotential liegendes Gehäuse (2), einen Stator (3), an welchem nutartige Aufnahmen (10) für Statorwicklungen (11) ausgebildet sind, wobei in den Aufnahmen (10) jeweils ein die Aufnahme (10) rotorseitig (8) schließendes Verschlusselements (4) vorgesehen ist, und einen innerhalb des Stators (3) drehbar gelagerten Rotor (8), wobei das jeweilige Verschlusselement (4) einen flächigen, elektrisch leitfähigen Leiterbereich (23) zur Abschirmung der Statorwicklungen (11) gegenüber dem Rotor (8) aufweist, wobei der Leiterbereich (23) mit dem Gehäuse (2) elektrisch leitend verbunden ist, wobei der Leiterbereich (23) über wenigstens eine Stirnseite (12, 13) des Stators (3) hinaus in Form einer Leiterbereichserweiterung (17, 18) fortgesetzt ist und zwischen dem Rotor (8) und wenigstens einem mehrere Statorwicklungen (11) umfassenden Wickelkopf (14, 15) angeordnet ist,
**dadurch gekennzeichnet,**
**dass** die Leiterbereichserweiterung (17, 18) radial nach außen gerichtet an einen Gehäuseabschnitt geführt ist.

2. Elektrische Maschine (1) nach Anspruch 1,
**dadurch gekennzeichnet,**
**dass** der Leiterbereich (23) über die gesamte Länge der Aufnahme (10) ausgebildet ist.

3. Elektrische Maschine (1) nach einem der vorhergehenden Ansprüche,
**dadurch gekennzeichnet,**
**dass** die Leiterbereichserweiterung (17, 18) ausgehend vom Verschlusselement (4) trapezförmig aufgeweitet ist.

4. Elektrische Maschine (1) nach einem der vorhergehenden Ansprüche,
**dadurch gekennzeichnet,**
**dass** der Leiterbereich (23) als eine erste Oberflächenschicht (20) des Verschlusselements (4) ausgebildet ist.

5. Elektrische Maschine (1) nach einem der vorhergehenden Ansprüche,
**dadurch gekennzeichnet,**
**dass** der Leiterbereich (23) zumindest teilweise aus einer elektrisch leitenden oder mit einem elektrisch leitenden Material beschichteten Folie ausgebildet ist.

6. Elektrische Maschine (1) nach einem der vorhergehenden Ansprüche,
**dadurch gekennzeichnet,**
**dass** der Leiterbereich (23) wenigstens in einem Berührungsbereich mit dem Stator (3) eine elektrisch isolierende zweite Oberflächenschicht (21) aufweist.

7. Elektrische Maschine (1) nach einem der vorhergehenden Ansprüche,
**dadurch gekennzeichnet,**
**dass** die Verschlusselemente (4) einen aus einem Kunststoff, insbesondere einem Duroplast, ausgebildeten Grundkörper (22) umfassen.

8. Elektrische Maschine (1) nach einem der vorhergehenden Ansprüche,
**dadurch gekennzeichnet,**
**dass** als das Bezugspotential ein Massepotential gewählt ist.

9. Kraftfahrzeug (24), umfassend wenigstens eine elektrische Maschine (1) nach einem der Ansprüche 1 bis 8.

## Claims

1. Electric machine (1) comprising an at least partially electrically conductive housing (2) located on a reference potential, a stator (3) on which groove-like receptacles (10) for stator windings (11) are formed, wherein a closing element (4) which closes the receptacles (10) on the rotor side (8) is respectively provided in the receptacles (10), and a rotor (8) rotatably mounted inside the stator (3), wherein the same closing element (4) has a planar, electrically conductive conductor region (23) for shielding the stator windings (11) from the rotor (8), wherein the conductor region (23) is electrically conductively connected to the housing (2), wherein the conductor region (23) is continued beyond at least one end face (12, 13) of the stator (3) in the form of a conductor region extension (17, 18) and is arranged between the rotor (8) and at least one winding head (14, 15) comprising a plurality of stator windings (11),
**characterised in that**
the conductor region extension (17, 18) is guided radially outwards to a housing section.

2. Electric machine (1) according to claim 1,
**characterised in that**
the conductor region (23) is formed over the entire length of the receptacle (10).

3. Electric machine (1) according to any one of the preceding claims,
**characterised in that**
the conductor region extension (17, 18), starting from the closing element (4), widens in a trapezoidal manner.

4. Electric machine (1) according to any one of the preceding claims,
**characterised in that**
the conductor region (23) is formed as a first surface layer (20) of the closing element (4).

5. Electric machine (1) according to any one of the preceding claims,
**characterised in that**
the conductor region (23) is formed at least partially from a foil which is electrically conductive or coated with an electrically conductive material.

6. Electric machine (1) according to any one of the preceding claims,
**characterised in that**
the conductor region (23) has an electrically insulating second surface layer (21) at least in a contact region with the stator (3).

7. Electric machine (1) according to any one of the preceding claims,
**characterised in that**
the closing elements (4) comprise a main body (22) formed from a plastic, in particular a thermosetting plastic.

8. Electric machine (1) according to any one of the preceding claims,
**characterised in that**
a ground potential is selected as the reference potential.

9. Motor vehicle (24) comprising at least one electric machine (1) according to any one of claims 1 to 8.

## Revendications

1. Moteur électrique (1), comprenant un boîtier (2) au moins en partie électriquement conducteur, situé sur un potentiel de référence, un stator (3), au niveau duquel des logements de type rainure (10) sont réalisés pour des enroulements de stator (11), dans lequel respectivement un élément de fermeture (4) fermant le logement (10) côté rotor (8) est prévu dans les logements (10), et un rotor (8) logé en rotation à l'intérieur du stator (3), dans lequel l'élément de fermeture (4) respectif présente une zone conductrice (23) plate, électriquement conductrice pour le blindage des enroulements de stator (11) par rapport au rotor (8), dans lequel la zone conductrice (23) est reliée de manière électriquement conductrice au boîtier (2), dans lequel la zone conductrice (23) se poursuit au-delà d'au moins un côté frontal (12, 13) du stator (3) sous la forme d'un élargissement de zone conductrice (17, 18) et est agencée entre le rotor (8) et au moins une tête d'enroulement (14, 15) comprenant plusieurs enroulements de stator (11),
**caractérisé en ce**
**que** l'élargissement de zone conductrice (17, 18) est guidé de manière dirigée radialement vers l'extérieur au niveau d'une section de boîtier.

2. Moteur électrique (1) selon la revendication 1,
**caractérisé en ce**
**que** la zone conductrice (23) est réalisée sur toute la longueur du logement (10).

3. Moteur électrique (1) selon l'une quelconque des revendications précédentes,
**caractérisé en ce**
**que** l'élargissement de zone conductrice (17, 18) est élargi en forme de trapèze à partir de l'élément de fermeture (4).

4. Moteur électrique (1) selon l'une quelconque des revendications précédentes,
**caractérisé en ce**
**que** la zone conductrice (23) est réalisée en tant que première couche de surface (20) de l'élément de fermeture (4).

5. Moteur électrique (1) selon l'une quelconque des revendications précédentes,
**caractérisé en ce**
**que** la zone conductrice (23) est réalisée au moins en partie à partir d'une feuille électriquement conductrice ou revêtue d'un matériau électriquement conducteur.

6. Moteur électrique (1) selon l'une quelconque des revendications précédentes,
**caractérisé en ce**
**que** la zone conductrice (23) présente au moins dans une zone de contact avec le stator (3) une deuxième couche de surface (21) électriquement isolante.

7. Moteur électrique (1) selon l'une quelconque des revendications précédentes,
**caractérisé en ce**
**que** les éléments de fermeture (4) comprennent un corps de base (22) réalisé à partir d'un plastique, en particulier d'un Duroplast.

8. Moteur électrique (1) selon l'une quelconque des revendications précédentes,
**caractérisé en ce**
**qu'**un potentiel de masse est sélectionné en tant que potentiel de référence.

9. Véhicule à moteur (24), comprenant au moins un moteur électrique (1) selon l'une quelconque des revendications 1 à 8.
